# EUROPÄISCHE PATENTSCHRIFT

(11) **EP 2 207 611 B1**
(45) Veröffentlichungstag und Bekanntmachung des Hinweises auf die Patenterteilung: **10.12.2014**
(21) Anmeldenummer: 08842569.9
(22) Anmeldetag: 06.10.2008
(51) Int. Cl.: B01D 53/50

(54) **ANLAGE UND VERFAHREN ZUR REINIGUNG VON RAUCHGASEN**
INSTALLATION AND METHOD FOR CLEANING FLUE GASES
INSTALLATION ET PROCÉDÉ DE PURIFICATION DE FUMÉES

(30) Priorität: 23.10.2007 DE 102007050904
(43) Veröffentlichungstag der Anmeldung: 21.07.2010
(73) Patentinhaber: Babcock Noell GmbH, 97080 Würzburg (DE)
(72) Erfinder: WELP, Helmut, 97199 Ochsenfurt (DE); SCHMIDT, Thomas, 97346 Iphofen (DE)
(74) Vertreter: Lüdtke, Frank
(86) Internationale Anmeldenummer: PCT/DE2008/001605
(87) Internationale Veröffentlichungsnummer: WO 2009/052775

(56) Entgegenhaltungen:
- EP-A- 0 339 683
- WO-A-88/07023
- DE-A1- 2 939 744
- DE-A1- 3 136 155
- US-A- 2 080 779
- US-A- 4 687 649
- US-A- 5 084 255
- US-A- 5 308 509

## Beschreibung

Die Erfindung betrifft eine Anlage und ein Verfahren zur Reinigung von Rauchgasen aus mit fossilen Brennstoffen von nach dem Oxyfuel-Prozeß arbeitenden Kraftwerken und die Nachrüstung von Kraftwerken zur Vorbereitung der Nachschaltung einer CO₂-Absorptionsstufe (post combustion) nach den Merkmalen des ersten und des 9. Patentanspruches.

Zur Reinigung von Rauchgas aus Kraftwerksanlagen sind unterschiedliche Verfahren und Anlagen seit langem bekannt.

DE 43 31 415 C3 beschreibt eine Vorrichtung zur Behandlung eines Rauchgasstromes mit Waschflüssigkeit in einem Behälter, einer ersten Sprüheinrichtung für Waschflüssigkeit im oberen Bereich des Behälters, einer unterhalb der Sprüheinrichtung angeordneten Gas-Flüssigkeitstrennstufe und einer unterhalb der Gas-Flüssigkeitstrennstufe angeordneten zweiten Sprüheinrichtung, wobei die Gas-Flüssigkeitstrennstufe zumindest mehrere im wesentlichen parallel auf Abstand angeordnete und sich im wesentlichen mehr zur Gasstromrichtung erstreckende Auffang- und Ableitrinnen aufweist. Das Dokument beschreibt den Aufbau eines allgemein zur Gasreinigung verwendeten Absorbers, der zur Flüssigreinigung eines Rauchgases Anwendung findet.

DE 10 2004 061 727 A1 beschreibt ein Verfahren zur Behandlung von Schwefeldioxid/Schwefeltrioxid-Fracht im CO₂-Strom aus einem CO₂-freien Kraftwerk nach dem Oxyfuel-Prozeß, wobei in dem CO₂-Strom ein Additiv zugegeben wird, welches die schädigende Wirkung von Schwefeldioxid/Schwefeltrioxid mindert.

DD 269 893 A1 beschreibt ein Verfahren und eine Anlage zur Additivsuspensionierung für die Rauchgasentschwefelung, wobei die Suspensionierungsaufbereitung in die Rauchgasentschwefelungsanlage integriert ist. Die Additive werden pneumatisch in den oberhalb des Absorbers befindlichen Behälter befördert, wobei die Förderluft mit einem Additivfeinanteil in einem Heißgasstrom vor den Absorptionseintritt geleitet wird und die Additivsuspension direkt in den Absorber aufgegeben wird.

DD 289 211 A5 beschreibt ein Verfahren zu internen Sulfitoxidation in nassen Rauchgasentschwefelungsanlagen. Bei dem Verfahren wird der Lufteintrag in die Waschsuspension zumindest teilweise nicht in einer gesonderten Oxidationsstufe, sondern in die Verbindungsleitung zwischen Waschsuspensionsförderpumpe und Verteilungseinrichtung eingebracht.

Bei der Befeuerung von Kraftwerken mit fossilen Brennstoffen entsteht ein Rauchgasstrom, der neben den im Verfahren abzuscheidenden Schadstoffen SO₂, HCL, HF, diverse Schwermetalle sowie Staubpartikel und hauptsächlich Kohlendioxid enthält.

Die Reinigung von Rauchgasen aus mit fossilen Brennstoffen befeuerten Kraftwerken mit Waschsuspension auf Kalk-/Kalksteinbasis und Zugabe von Sauerstoff in den Waschprozeß zum Erhalt von weiterverwertbaren Gipsprodukten als Reststoff ist bekannt.

Das Auswaschen der Schadgase aus dem Rauchgas mit einer Kalk-/Kalksteinwaschsuspension erfolgt in verschiedenen Wäschersystemen.

Zum Erreichen eines optimalen Stoffaustausches zwischen dem Rauchgas und der Waschsuspension werden sowohl Naßwäscher, sogenannte Absorber, mit verschiedenen Bedüsungssystemen ohne Kontakteinbauten als auch Absorber mit Bedüsungssystem und zusätzlich verschieden ausgeführten Kontakteinbauten und auch Absorbersystemen nur mit Kontakteinbauten eingesetzt.

Zum Umsatz des Sulfits zum Sulfat wird Sauerstoff in Form von komprimierten feinsten Luftbläschen entweder in einem separaten Oxidationsbehälter, durch den die Kalksteinsuspension aus dem Absorber geleitet wird, oder, heute weiter verbreitet, direkt in den Absorbersumpf, in dem die Kalk-/Kalksteinsuspension bevorratet wird, eingetragen und dispergiert.

In US 5,674,459 A wird ein Verfahren beschrieben, bei dem H₂O₂ als Absorptionsmittel für Schwefeloxide und Stickstoffoxide und als Oxidationsmittel anstelle von Kalksteinsuspension beziehungsweise Kalkmilch verwendet wird. Die anfallenden Produkte im Entschwefelungsprozeß sind zunächst H₂SO₄ und HNO₃. Kalksteinmehl wird anschließend zur Neutralisation der entstehenden Säure verwendet. Das eingesetzte Absorptionsmittel ist im Vergleich zur Kalksteinsuspension/Kalkmilch sehr teuer.

US 5,630,991 A beschreibt ein Verfahren, bei dem Ammoniumsalze zur Erhöhung der Kalksteinmehllöslichkeit eingesetzt werden, die anschließend in einem separaten Reaktionsbehälter durch Anheben des pH-Wertes auf 11 bis 12 mit Kalkmilch als Ammoniak wieder aus der ausgeschleusten Suspension entfernt werden muß.

US 5,213,782 A beschreibt ein Verfahren, bei dem Magnesiumoxid und Brandkalk zur Entschwefelung eingesetzt wird. Der eingesetzte separate Reaktionsbehälter hat die Aufgabe eines Eindickers. Zur Entschwefelung wird ein Absorber mit Sprühebene eingesetzt, unter dem ein Tray eingesetzt wird.

US 5084255 A beschreibt eine Anlage zur Reinigung von Rauchgas aus mit fossilen Brennstoffen befeuerten Kraftwerken, welche aus mehreren Aufbereitungsstufen besteht, wobei einem Absorber im oberen Bereich Suspension mit Magnesiumhydroxid als Absorptionsmittel zum Rohgas zugegeben wird, im unteren Bereich ein Absorptionssuspensionssumpf vorhanden ist, über dem die Zufuhr für das Rohgas angeordnet ist. Im Gegensatz zu dem in der vorliegenden Erfindung beschriebenen Verfahren wird hier die Absorbersuspension direkt aus dem Absorbersumpf mittels Umwälzpumpen abgezogen und dem Absorber im oberen Bereich über Sprühebenen im Gegenstrom zum Rohgas wieder zugegeben. Das teilweise im nachfolgend beschriebenen Regenerationsprozeß zurückgewonnene Absorptionsmittel Magnesiumhydroxid wird dem Absorber direkt zugegeben. Im Gegensatz zur vorliegenden Erfindung wird hier also nur ein Teilstrom der Absorbersuspension dem Oxidationsbehälter zugeführt und nach der Oxidation vollständig zur Umfällung mit Calciumhydroxid zu Gips in den zweiten Reaktionsbehälter überführt.

Die Ausschleusung des Gipses kann nur nach der Umfällreaktion aus dem zweiten Reaktionsbehälter erfolgen. Das bei der Umfällreaktion entstehende Magnesiumhydroxid wird dem Absorber als Absorptionsmittel wieder zugeführt. In der vorliegenden Erfindung erfolgt die Oxidation des Calciumsulfits in der gesamten umgewälzten Absorbersuspension zu Gips in der ersten Kammer und wird auch dort über Hydrozyklone ausgeschleust.

Die zweite Kammer dient nur als Pumpenvorlage für die Umwälzpumpen und zur Absorbenszudosierung.

Der Absorber weist im oberen Bereich keine Kontakteinbauebene auf, die von Rohgas durchströmt und mit einer Suspension beaufschlagt wird. Weiterhin ist nachteilig an dieser Anlage, daß mehrere separate Behälter für die Aufbereitung nötig sind, die über Pumpen mit einem Suspensionsteilstrom versorgt werden.

In US 4,687,649 wird ein Verfahren beschrieben, bei dem in der ersten Stufe das Rauchgas gequencht und anschließend in der zweiten Stufe Kalksteinmehlsuspension SO₂ abgeschieden wird. Für eine bessere Oxidation des Sulfits zu Sulfat wird hier in einer separaten Stufe Schwefelsäure zur pH-Reduzierung zudosiert und anschließend Oxidationsluft zugeführt.

In US 2,080,779 wird ein Verfahren beschrieben, bei dem zwar eine separate Oxidationsstufe vorgesehen ist, die Suspension wird aber über eine Pumpe dem Oxidationsbehälter zugeführt und nicht über eine direkte Verbindungsleitung zwischen Absorber und Reaktionsbehälter. Das Verfahren dient zur Reduzierung von Anbackungen beim Absorptions- und Oxidationsprozess.

DE 3136155 A1 beschreibt ein Verfahren, bei dem eine Waschsuspension aus Kalksteinmehl und Kalkmilch hergestellt wird, die über eine Umwälzpumpe einer Sprühebene in einem Waschturm zur Desulfurisierung zugeführt wird, wobei das Rauchgas von oben nach unten im Gleichstrom mit der eingedüsten Suspension einen Gasflüssigkeitskontaktierungsmechanismus durchströmt und oberhalb des Absorbersuspensionssumpfes den Waschturm unten verlässt. Die separaten Kammern dienen zur getrennten Zudosierung von Kalksteinmehl und Branntkalk oder Kalkhydrat. Die Absorbersuspension aus dem Waschturm fliesst in ein erstes Gefäß mit einem Überlauf zu einem zweiten Gefäß, wobei dem ersten Gefäß eine Kalksteinaufschlämmung als Absorbens aber unterstöchiometrisch zugeführt wird, und im zweiten Gefäß gebrannter Kalk oder gelöschter Kalk in der Menge zugegeben wird, so daß das aus der ersten Kammer entstehende CO₂ (Kohlensäure) zu CaCO₃ neutralisiert wird. Die so entstandene Absorptionslauge aus dem zweiten Gefäß wird zu den Düsen des Absorptionsrohres in den Absorber zurückgeführt. Nachteilig an diesem Stand der Technik ist weiterhin, dass in beiden Gefäßen kein Zuführen von Oxidationsluft, beispielsweise mittels einer Lanze, und keine Brüdenabsaugung vorgesehen ist und dass der Absorptionsturm nach dem Gleichstromprinzip arbeitet.

In US 5,308,509 wird ein Verfahren beschrieben, bei dem die Oxidation von Sulfit zu Sulfat im Absorbersumpf stattfindet, ein Teilstrom dieser oxidierten Suspension wird einem Hydrozyklon zugeführt und in einem gipsreichen Unterlauf und einen Oberlauf, der die Feinteile, Flugasche, unreagiertes Absorbens enthält, aufgeteilt.

In EP 0 339 683 A2 wird ein Verfahren beschrieben, bei dem ein Teilstrom der Absorbersuspension in einem Oxidationsbehälter mit Oxidationsluft beaufschlagt wird. Hier wird Magnesiumhydroxid als Absorptionsmittel eingesetzt. In der Oxidationsstufe wird Magnesiumsulfit zu Sulfat oxidiert. Die weiteren Stufen dienen zur Gipsfällung mit Kalkmilch und zur Regeneration des Absorptionsmittels Magnesiumoxid.

In DE 29 39 744 A1 wird ein Verfahren beschrieben, bei dem in der ersten Absorptionsstufe Chlor und Fluorverbindungen abgeschieden werden und in der nachgeschalteten S02-Absorptionsstufe eine Kalziumionen enthaltene Waschflüssigkeit zur Bildung von Gips eingesetzt wird. Die Besonderheit ist hier, dass eine Waschflüssigkeit mit löslichen Kalziumsalzen für die SO₂-Abscheidung eingesetzt wird. Zur Verringerung des Chlorionengehaltes wird Waschflüssigkeit zur Erzeugung von kristallinem Kalziumchlorid eingedampft.

In WO 88/07023 wird ein Verfahren zur katalytischen Oxidation beschrieben, wobei der Schwerpunkt des Verfahrens die katalytische Oxidation von Sulfiten in einem separaten Behälter mit Enzymen als Katalysatoren darstellt.

All diesen Systemen ist gemeinsam, daß der erforderliche Sauerstoff in Form von Luft im Überschuß in den Prozeß eingetragen wird. Der nicht verbrauchte Sauerstoff und die übrigen Bestandteile der Luft sowie das bei der chemischen Umsetzung erzeugte CO₂ gelangen in das im Anschluß an den Reinigungsprozeß an die Atmosphäre abgegebene Rauchgas. Der Stickstoffanteil im Rauchgas wird durch die Oxidationszufuhr weiter erhöht. Weiterhin ist es in der Regel nicht immer möglich, den pH-Wert der Absorptionssuspension so einzustellen, daß diese eine maximale Wirkung im Reinigungsprozeß erzielt. Weiterhin kann nicht mit allen bekannten Verfahren der gewünschte Abscheidegrad und das gewünschte Maß an Staubabscheidung erreicht werden.

Beim Oxyfuel-Prozess in Kraftwerken wird zur Verbrennung reiner Sauerstoff eingesetzt und als Rauchgas ein CO₂-Reichgas mit minimalem Stickstoffgehalt, aber konzentrierteren Schadgasgehalten erzeugt. Wenn das CO₂-Reichgas von Schadgasen und Schadstoffen befreit ist und der Wasserdampf kondensiert ist, kann das konzentrierte CO₂-Reichgas direkt für eine Lagerung komprimiert werden.

Ausgehend von einer Anlage zur Reinigung von Rauchgasen wie diese in US-5.084.255 A beschrieben ist, liegt der Erfindung die Aufgabe zugrunde, diese zu verbessern.

Diese Aufgabe wird durch eine Anlage nach den Merkmalen des ersten Patentanspruches und ein Verfahren zur Reinigung von Rauchgasen erreicht.

Unteransprüche geben vorteilhafte Ausgestaltungen der Erfindung wieder.

Die erfindungsgemäße Anlage zum Reinigen von Rauchgas besteht aus mehreren Absorptionsstufen, bei denen Rohgas in den Absorber eingeleitet wird, in dessen oberen Bereich Kontakteinbauten vorgesehen sind, die mit Suspension beaufschlagt werden, wobei die Kontakteinbauten oder Einbauebenen durch Rohgas durchströmt werden. Die Einbauebenen sind gasdurchlässig und können Siebe, Lochplatten oder Bleche oder andere geeignete Einbauten darstellen.

Vorteilhaft ist es, wenn die Kontakteinbauten ein, mehrere, vorzugsweise zwei Lochbleche darstellen. Die Staubabscheidung im Absorber oder Sprühturm wird durch die Lochbleche verbessert, da die Rauchgasgeschwindigkeit in den Bohrungen der Lochbleche wesentlich höher ist, als die Geschwindigkeit vor den Sprühebenen.

Die gegen die Rauchgasströmung durch das unterste Lochblech ablaufende und durch die höhere Strömungsgeschwindigkeit des Rauchgases in den Bohrungen fein verteilte Absorptionssuspension wird im Absorptionssumpf aufgefangen, der sich im unteren Teil des Absorbers befindet. In diesem kann vorteilhafterweise ein Rührwerk, beispielsweise ein Schrägrührwerk, angeordnet sein. Vom Absorptionssumpf führt eine Leitung zu einem separaten Reaktionsbehälter, der aus zwei Kammern besteht, die durch eine Trennwand mit Überlauf gebildet werden. In die erste Kammer fließt aus dem Sumpf Absorptionssuspension ein, die dann vom Absorber gasdicht getrennt ist. In dieser ersten Kammer des Reaktionsbehälters wird über eine Rohrleitung, vorzugsweise eine Lanze, mittels Gebläse Oxidationsluft eingebracht.

Eine entsprechende Dimensionierung der Verbindungsleitung zwischen Absorber und Reaktionsbehälter verhindert eine unerwünschte Gasrückströmung und damit die Verunreinigung des CO₂-Reichgases durch Lufteintritt in den Absorber. Dies stellt eine einfache Abdichtungsmöglichkeit durch gezielte Suspensionsabführung in den Reaktionsbehälter dar. Durch den Eintrag der Oxidationsluft in die Absorptionssuspension findet eine Oxidation des Calciumsulfites zu Gips statt und das Austreiben von CO₂ durch Luft stellt die optimale Kalksteinlöslichkeit in der zweiten Kammer des Reaktionsbehälters sicher. Zur besseren Vermischung ist es vorteilhaft, einen Rührer, beispielsweise einen Schrägrührer, anzuordnen. Da die Suspension nicht mit Kalkstein angereichert ist, weist sie einen niedrigeren pH-Wert auf, als die Suspension in der zweiten Reaktionskammer. Das ist vorteilhaft, da am Boden der ersten Reaktionskammer über eine Pumpe Suspension für eine Fest-Flüssig-Trennung abgesaugt wird, die vorteilhafterweise in einem Hydrozyklon stattfinden sollte. Das Absaugen der Suspension aus der ersten Kammer erfolgt mittels Hydrozyklonpumpe. Der Hydrozyklon trennt eine Gipssuspension und eine dünnere Flüssigkeit ab, die wieder der ersten Kammer wieder zugeführt wird, aber auch einem Kalksteinsuspensionsbehälter zugeführt werden kann. In dem Maße, in dem der Flüssigkeitsspiegel im Absorber steigt, steigt auch der Flüssigkeitsspiegel in der ersten Kammer des Reaktionsbehälters, wobei dadurch Suspension in die zweite Kammer des Reaktionsbehälters überläuft. In diese wird eine Kalksteinsuspension eingeleitet und mittels Rührer vermischt. Die Suspension in der zweiten Reaktionskammer weist durch das Einleiten der Kalksteinsuspension einen höheren PH-Wert auf, so daß die aus dieser Kammer abgeleitete Absorptionssuspension im Absorber intensiver auf die Schadgasabscheidung wirken kann. Durch Leitungen wird die Absorptionssuspension den Sprühebenen im Absorber zugeleitet, die über oder teilweise zwischen den Kontakteinbauten, vorzugsweise den Lochblechen, angeordnet sind. Es hat sich als vorteilhaft erwiesen, über dem unteren Lochblech eine Sprühebene anzuordnen und über dem darüber befindlichen Lochblech zwei Sprühebenen, in denen Absorptionssuspension aus der zweiten Kammer des Reaktionsbehälters eingeleitet werden.

Die erfindungsgemäße Lösung sieht weiterhin vor, daß das im Reaktionsbehälter entstandene CO₂ und die überflüssige Oxidationsluft im Reaktionsbehälter separat aus dem Prozeß entfernt werden und dadurch beim Oxyfuel-Prozess eine Verunreinigung des CO₂-Reichgases verhindert wird. Dadurch wird auch eine gasdichte Trennung von Rauchgas und Oxidationsluft erreicht. Das kann vorteilhafterweise über einen Brüdenabzug erfolgen. Das abgezogene Gas kann gesondert einer Reinigung zugeführt werden. Vorteilhaft ist es, den Brüdenabzug auch zu nutzen, um die im Kalk-/Kalksteinsuspensionsbehälter entstehenden Gase abzusaugen. Der Kalksteinsuspensionsbehälter dient dazu, eine Kalksteinsuspension herzustellen. Aus einem Vorratsbehälter, vorzugsweise einem Silo mit Dosiereinrichtung, wird Kalk-/Kalksteinmehl in die Prozeßflüssigkeit eingebracht. Als Dosiereinrichtung ist ein Schneckenförderer geeignet. Im Kalk-/Kalksteinsuspensionsbehälter ist vorteilhafterweise ein Rührwerk angeordnet, welches zur Durchmischung von Kalk-/Kalksteinmehl und Prozeßwasser ohne Oberlauf sorgt. Mittels Kalksteinsuspensionspumpe wird die Kalksteinsuspension in die zweite Kammer des Reaktionsbehälters befördert.

Im oberen Teil des Absorbers sind Tropfenabscheiderebenen angeordnet, die über den Kontakteinbauten bzw. den Lochblechen liegen. Dabei kann es sich um Fein- und Grobabscheiderebenen handeln, wobei die Grobtropfenabscheiderebene unterhalb der Feintropfenabscheiderebene angeordnet ist und alle Ebenen mit Reinigungsebenen versehen sind, über die Prozeßwasser in den oberen Teil des Absorbers eingebracht werden und das gereinigte Rauchgas über die Absorberhaube den Absorber verläßt.

Durch den Eintrag der Oxidationsluft in die erste Stufe des Reaktionsbehälters, in der das Reaktionsmittel Kalkstein weitgehend verbraucht ist, wird die Oxidation des Sulfits zum Sulfat verbessert. Durch Eintragen frischer Kalksteinsuspension unmittelbar in der zweiten Stufe des Reaktionsbehälters, die als Vorlage der Waschsuspension für die Sprühebenen dient, wird die Abscheidung von SO₂ aus dem Rauchgas verbessert.

Durch die Verwendung des Lochbleches als Kontakteinbau oder mehrerer hintereinander geschalteter Lochbleche für die Rauchgasreinigung, die mit Suspension von den darüber liegenden Sprühebenen beaufschlagt werden, wird eine gleichmäßige Geschwindigkeitsverteilung schon vor den Sprühebenen erreicht. Dieser Aufbau des Absorbers ermöglicht auch bei hohen Schwefeldioxidgehalten Abscheidegrade von über 99 %.

Durch das Verwenden von Lochblechen für die Rauchgasreinigung, die mit Suspension von den darüberliegenden Sprühebenen beaufschlagt werden, wird auch eine verbesserte Staubabscheidung im Sprühturm erreicht.

Weiterhin wird durch das Verwenden eines oder mehrerer hintereinander geschalteter Lochbleche für die Rauchgasreinigung, die mit Suspension von den darüberliegenden Sprühebenen beaufschlagt werden, zusätzliche Abscheideebenen erzeugt, ohne daß ein zusätzlicher Energiebedarf zum Umpumpen der Waschsuspension erforderlich ist.

Darüber hinaus wird die überflüssige Oxidationsluft aus dem Reaktionsbehälter und das ausgetriebene CO₂ abgesaugt und separat gereinigt und aus dem Prozeß ausgeschleust oder nach Reinigung dem gereinigten Rauchgas wieder zugeführt.

Im Folgenden wird die Erfindung an einem Ausführungsbeispiel und einer Figur näher erläutert.

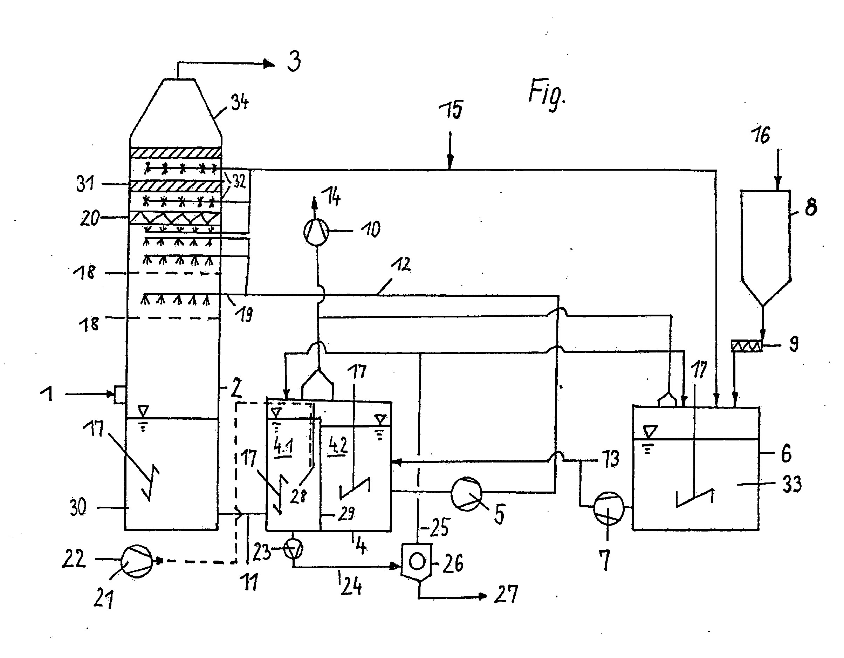

Die Figur zeigt eine Ausführungsvariante der erfindungsgemäßen Anlage. Im Folgenden sollen Anlage und Verfahren näher erläutert werden.

Die erfindungsgemäße Anlage zum Reinigen vom Rauchgas aus fossilen Brennstoffen besteht im Wesentlichen aus dem Absorber 2, der entsprechend dimensionierten Verbindungsleitung zum Reaktionsbehälter, dem Reaktionsbehälter 4, bestehend aus zwei Kammern 4.1, 4.2, neben dem sich auf gleicher Ebene ein Kalk- oder Kalksteinsuspensionsbehälter 6 befindet, über dem ein Kalk- oder Kalksteinsilo 8 für Kalkoder Kalksteinmehl 16 angeordnet ist, wobei die Dosiereinrichtung 9, eine Förderschnecke, das Kalk- oder Kalksteinmehl 16 dem Kalksteinsuspensionsbehälter 6 zudosiert. Prozeßwasser 15 wird in den Behälter eingebracht und das Rührwerk 17 sorgt für eine gleichmäßige Durchmischung. Von der ersten Kammer 4.1 des Reaktionsbehälters 4 führt eine Leitung, die den Zulauf 24 des Hydrozyklons bildet, zum Hydrozyklon 26, mit dem Gipssuspension 27 abgeschieden wird. Die dünnflüssige Suspension wird in Leitungen 25 für den Oberlauf des Hydrozyklons 26 wieder zur ersten Kammer 4.1 oder aber zum Kalk- oder Kalksteinsuspensionsbehälter 6 gepumpt. Um die Suspension abziehen zu können, ist vor dem Hydrozyklon 26 eine Hydrozyklonpumpe 23 angeordnet. Leitungen 13 für die Kalksteinsuspension führen vom Kalk- oder Kalksteinsuspensionsbehälter 6 zur zweiten Kammer 4.2 des Reaktionsbehälters 4, wobei in diesen Leitungen 13 eine Umwälzpumpe 7 für Kalksteinsuspension angeordnet ist.

Im unteren Teil des Absorbers 2 befindet sich der Absorptionssuspensionssumpf 30, in den ein Schrägrührwerk 17 hineinragt, und von dem Rohrleitungen 11 für die Absorptionssuspension zum Reaktionsbehälter 4 führen. Über dem Absorptionssuspensionssumpf 30 wird das Rohgas 1 in den Absorber 2 aufgegeben. Darüber sind zwei Lochbleche 18 angeordnet, zwischen denen sich die erste Sprühebene 19 befindet, wobei zwei weitere Sprühebenen 19 über dem zweiten Lochblech 18 angeordnet sind. Zu den unteren Sprühebenen 19 führen Leitungen für die Absorptionssuspension 12, an denen sich eine Umwälzpumpe 5 befindet und die mit der zweiten Kammer 4.2 des Reaktionsbehälters 4 verbunden sind. Oberhalb der Sprühebene 19 sind Reinigungsebenen 32 angeordnet, zwischen denen sich die Abscheiderebene 20 für Grobtropfen und die Abscheiderebene 31 für Feintropfen befinden, über denen die Absorberhaube 34 für das Reingas 3 angeordnet ist. Die Reinigungsebenen 32 werden mit Prozeßwasser 15 beaufschlagt.

Zum Einbringen der Oxidationsluft 22 in die Absorptionssuspension dient ein Gebläse 21, von dem eine Leitung zur Lanze 28 führt, die in der ersten Kammer 4.1 des Reaktionsbehälters 4 angeordnet ist. Über beiden Reaktionskammern 4.1, 4,2 und dem Kalk-/Kalksteinsuspensionsbehälter 6 ist ein Abzug angeordnet, mit dem der Brüdenabzug 14 durch ein Gebläse 10 für Brüden abgezogen wird.

Das zu reinigende Rohgas 1 tritt in den Absorber 2 ein und ändert nach dem Eintritt seine Strömungsrichtung nach oben und verteilt sich gleichmäßig über den Absorberquerschnitt. Danach durchströmt es ein System von Kontakteinbauten wie den Lochblechen 18 und drei mit den Sprühdüsen ausgerüsteten Sprühebenen 19. Diese werden mit zirkulierender Absorption und Kalksteinwaschsuspension beaufschlagt. Das so gereinigte Reingas 3 durchläuft anschließend den oberen Teil des Absorbers 2, Tropfenabscheiderebenen 20, 31, wobei die mitgerissenen Tröpfchen effektiv abgeschieden werden, und verläßt den Absorber 2 durch die Absorberhaube 34.

Der untere Teil des Absorbers 2 mit dem Absorptionssuspensionssumpf 30 ist durch Rohrleitungen 11 mit dem zweigeteilten Reaktionsbehälter 4 verbunden. Die Zweiteilung des Reaktionsbehälters 4 erfolgt mittels Trennwand 29, die einen Überlauf darstellt. In beiden Kammern 4.1, 4.2, des Reaktionsbehälters 4 sind Rührwerke 17 angeordnet, die zur Suspendierung und Dispergierung dienen. Mittels Lanze 28 wird Oxidationsluft 22 in die erste Kammer 4.1 eingeführt. Die Aufgabe dieser Oxidationsluft 22 besteht darin, eine lastabhängige Luftmenge in die Suspension einzubringen, um das bei der SO₂-Abscheidung gebildete Calciumsulfit in Calciumsulfat aufzuoxidieren. Die zur Oxidation erforderliche komprimierte Luftmenge 22 ist abhängig von der SO₂-Fracht und wird durch das Gebläse 21 bereitgestellt. Aus der ersten Kammer 4.1 wird eine Suspension abgezogen und mittels Hydrozyklon 26 Gipssuspension 27 abgeschieden. Die zweite Kammer 4.2 des Reaktionsbehälters 4 dient als Pumpenvorlage für die Umwälzpumpe 5 der Absorptionssuspension, welche die beschriebenen Sprühebenen 19 im Absorber 2 versorgt. Die zweite Kammer 4.2 ist mit einem vertikal angeordneten Rührwerk 17 zur Suspendierung ausgerüstet. Ein Überlauf von der ersten Kammer 4.1 des Reaktionsbehälters 4 in die zweite Kammer 4.2 sorgt für eine beruhigte Zufuhr und die Entgasung der überschüssigen Oxidationsluft 22 aus der Suspension und aus diesem Behälterteil. Beide Behälterteile 4.1, 4.2 werden durch eine zentral auf dem Behälterdach angeordnete Brüdenabzugshaube mit integriertem Tropfenabscheider entlüftet. Das abgesaugte Gas, welches überwiegend aus Oxidationsluft und CO₂ besteht, wird durch Tropfenabscheider gereinigt und separat über das Brüdengebläse 10 abgeleitet. Das darin enthaltene CO₂ kann in einem weiteren Verfahrensschritt abgetrennt werden.

### Liste der verwendeten Bezugszeichen

- 1: Rohgas
- 2: Absorber
- 3: Reingas nach Absorber
- 4: Reaktionsbehälter
- 4.1.: Erste Kammer des Reaktionsbehälters 4
- 4.2.: Zweite Kammer des Reaktionsbehälters 4
- 5: Umwälzpumpe
- 6: Kalk-/Kalksteinsuspensionsbehälter
- 7: Umwälzpumpe für Kalksteinsuspension
- 8: Kalk-/Kalksteinsilo
- 9: Dosiereinrichtung
- 10: Gasabzug/ Gebläse für Brüden
- 11: Rohrleitung für Absorptionssuspensionssumpf zum Reaktionsbehälter
- 12: Leitungen mit Suspension zu den Sprühebenen
- 13: Leitung für Kalksteinsuspension zum Reaktionsbehälter
- 14: Brüdenabzug vom Reaktionsbehälter und vom Kalk-/Kalksteinsuspensionsbehälter 6
- 15: Prozeßwasser
- 16: Kalk-/ Kalksteinmehl
- 17: Rührwerk
- 18: Lochblech
- 19: Sprühebene
- 20: Tropfenabscheiderebene (grob)
- 21: Gebläse für die Oxidationsluft 22
- 22: Oxidationsluft
- 23: Hydrozyklonpumpe
- 24: Zulauf Hydrozyklon
- 25: Leitungen für den Oberlauf des Hydrozyklons
- 26: Hydrozyklon
- 27: Gipssuspension
- 28: Lanze
- 29: Trennwand mit Überlauf
- 30: Absorptionssuspensionssumpf
- 31: Tropfenabscheiderebene (fein)
- 32: Reinigungsebene
- 33: Kalk-/ Kalksteinsuspension
- 34: Absorberhaube

## Patentansprüche

1. Anlage zur Reinigung von Rauchgasen aus mit fossilen Brennstoffen befeuerten Kraftwerken, insbesondere von nach dem Oxyfuel-Prozeß arbeitenden Kraftwerken, bestehend aus mehreren Absorptionsstufen mit einem Absorber (2) mit einer Leitung für ein Reingas (3) in einer Absorptionshaube (34), in dessen oberen Bereich mindestens eine mit einer Suspension (12) beaufschlagte Kontakteinbauebene angeordnet ist, die von einem Rohgas (1) durchströmt wird und der untere Bereich des Absorbers (2) einen Absorptionssuspensionssumpf (30) aufweist, über dem ein Zulauf für das Rohgas (1) angeordnet ist, wobei ein separater Reaktionsbehälter (4), in den Oxidationsluft (22) in die Absorptionssuspension eingebracht wird und der Absorptionssuspensionssumpf (30) des Absorbers (2) mit dem separaten Reaktionsbehälter (4) in Verbindung steht, in dessen unteren Bereich eine Öffnung zum Ausschleusen von Suspension mit einer Leitung zu einer Trennvorrichtung angeordnet ist und die Anlage einen Suspensionsbehälter aufweist, **dadurch gekennzeichnet, daß**
- als Trennvorrichtung ein Hydrozyklon (26) angeordnet ist,
- der Suspensionsbehälter einen Kalk-/Kalksteinsuspensionsbehälter (6) darstellt,
- der separate Reaktionsbehälter (4) aus zwei durch eine Trennwand (29) mit Überlauf getrennten Kammern (4.1, 4.2) besteht, in dessen erste Kammer (4.1) die Oxydationsluft (22) in die Absorptionssuspension mittels einer Lanze (28) eingebracht wird und der Absorptionssuspensionssumpf (30) des Absorbers (2) mittels einer Rohrleitung (11) mit der ersten Kammer (4.1) des separaten Reaktionsbehälters (4) in Verbindung steht, die mittels Öffnung im unteren Bereich zum Ausschleusen von Suspension mittels Zulaufleitung (24) mit dem Hydrozyklon (26) verbunden ist, von dessen Oberlauf Leitungen (25) sowohl zur ersten Kammer (4.1) als auch zu dem Kalk-/Kalksteinsuspensionsbehälter (6) führen,
- die zweite Kammer (4.2) des separaten Reaktionsbehälters (4) über eine Leitung (13) mit dem Kalksteinsuspensionsbehälter (6) in Verbindung steht, durch die Kalk-/Kalksteinsuspension (33) vom Kalk-/Kalksteinsuspensionsbehälter (6) in die zweite Kammer (4.2) des separaten Reaktionsbehälters (4) fließt,
- ein Gasabzug (10) über den beiden Kammern (4.1, 4.2) des separaten Reaktionsbehälters (4) angeordnet ist, welcher den Brüden in einen Brüdenabzug (14) absaugt,
- eine Leitung (12) für Suspension zwischen mindestens einer Sprühebene (19) des Absorbers (2) und der zweiten Kammer (4.2) des separaten Reaktionsbehälters (4) angeordnet ist, wobei die Suspension von der zweiten Kammer (4.2) des Reaktionsbehälters (4) zum Absorber (2) fließt,
- eine Zuführung für Prozeßwasser (15) zu einer Reinigungsebene (32) oberhalb und unterhalb mindestens einer Tropfenabscheiderebene (20, 31) und oberhalb der Einbauebene und der Sprühebene (19) angeordnet ist.

2. Anlage nach Anspruch 1, **gekennzeichnet dadurch, daß** die Kontakteinbauebene im Absorber (2) mindestens ein Lochblech (18) mit darüber angeordneter Sprühebene (19) darstellt.

3. Anlage nach den Ansprüchen 1 bis 2, **dadurch gekennzeichnet, daß** den Lochblechen (18) und Sprühebenen (19) eine Grob- und eine FeinTropfenabscheiderebene (20, 31) nachgeschaltet sind.

4. Anlage nach den Ansprüchen 1 bis 3, **gekennzeichnet dadurch, daß** vor einem Brüdenabzug (14) ein Gebläse (10) für Brüden angeordnet ist, welches die Brüden des Reaktionsbehälters (4) und des Kalk-/Kalksteinsuspensionsbehälters (6) absaugt.

5. Anlage nach den Ansprüchen 1 bis 4, **dadurch gekennzeichnet, daß** im Absorptionssuspensionssumpf (30), in den Kammern (4.1, 4.2) des Reaktionsbehälters (4) und im Kalk-/Kalksteinsuspensionsbehälter (6) ein Rührwerk (17) angeordnet ist.

6. Anlage nach den Ansprüchen 1 bis 5, **dadurch gekennzeichnet, daß** in der Leitung (12) für die Absorptionssuspension zu den Sprühebenen (19) und einer Leitung (13) für die Kalksteinsuspension zum Reaktionsbehälter (4) Umwälzpumpen (5, 7) angeordnet sind.

7. Anlage nach den Ansprüchen 1 bis 6, **dadurch gekennzeichnet, daß** für die Zuführung der Oxidationsluft (22) in den Reaktionsbehälter (4) ein Gebläse (21) angeordnet ist.

8. Anlage nach Anspruch 6, **dadurch gekennzeichnet, daß** die Absorberpumpen zur Energieoptimierung drehzahlgeregelt sind.

9. Verfahren zur Reinigung von Rauchgas aus mit fossilen Brennstoffen befeuerten Kraftwerken, in der Anlage nach den Merkmalen des ersten Patentanspruches, durch ein mehrstufiges Absorptionsverfahren, bei dem
- das zu reinigende Rohgas (1) im Absorber (2) in einer ersten Reinigungsstufe mindestens eine mit Suspension beaufschlagte Einbauebene entgegen der Suspensionsrichtung durchströmt,
- die im Absorptionssuspensionssumpf (30) anfallende saure Suspension der ersten Kammer (4.1) des Reaktionsbehälters (4) zugeführt und mit Oxidationsluft (22) behandelt wird, so daß in einer ersten Stufe Calciumsulfit zu Calciumsulfat oxidiert, wobei im unteren Bereich Suspension abgezogen wird und
- die verbleibende Suspension mittels Überlauf über die Trennwand (29) in die zweite Kammer (4.2) gelangt,
- der zweiten Kammer (4.2) frische Kalksteinsuspension zugeführt wird,
- das Produkt der zweiten Stufe als Absorptionssuspension der Sprühebene (19) des Absorbers (2) zugeführt wird, wobei
- das in der ersten Kammer (4.1) des Reaktionsbehälters (4) durch die Oxidation mit Oxidationsluft (22) ausgetriebene CO₂ und die überschüssige Oxidationsluft (22) aus dem Reaktionsbehälter (4) abgezogen und separat behandelt wird und
- das behandelte Rohgas nach der Sprühebene (19) der Tropfenabscheiderebene (20, 31) und einer Reinigungsebene (32) zugeführt wird, bevor es den Absorber (2) verläßt,
- der ersten Reaktionskammer (4.1) im unteren Bereich Absorptionssuspension abgezogen wird, von der im Hydrozyklon (26) Gipssuspension (27) abgetrennt und aus dem Prozeß ausgebracht wird, wobei die verbleibende Flüssigkeit der ersten Kammer (4.1) oder/und dem Kalk-/ Kalksteinsuspensionsbehälter (6) zugeführt wird.

10. Verfahren nach Anspruch 9, **dadurch gekennzeichnet, daß** die Absorptionssuspension einer Sprühebene (19) mit einer oder mehreren übereinander liegende Eindüsebenen über ein Lochblech (18) zugeführt wird.

11. Verfahren nach den Ansprüchen 9 und 10, **dadurch gekennzeichnet, daß** der Brüden einer Reinigung zugeführt wird..

## Claims

1. An installation for cleaning flue gases from power generating plants fired with fossil fuels, in particular power generating plants operating based on the oxyfuel combustion process, comprising a number of absorption stages with an absorber (2) with a conduit for a clean gas (3) in an absorption hood (34), in the upper area of which at least one contact mounting level is disposed, which is impinged with a suspension (12) and which is flowed through by a raw gas (1), and the lower area of the absorber (2) has an absorption suspension sump (30) above which a supply for the raw gas (1) is disposed, wherein a separate reaction container (4), in which oxidation air (22) is introduced into the absorption suspension, and the absorption suspension sump (30) of the absorber (2) is connected to the separate reaction container (4), in the lower area of which an opening is provided for discharging suspension by way of a conduit into a separation device, and the installation has a suspension container, **characterized in that**
- a hydrocyclone (26) is disposed as a separation device,
- the suspension container is a lime/limestone suspension container (6),
- the separate reaction container (4) consists of two chambers (4.1, 4.2) separated by a separation wall (29) with an overflow, in the first chamber (4.1) of which the oxidation air (22) is introduced into the absorption suspension by means of a lance (28) and the absorption suspension sump (30) of the absorber (2) is connected, by means of a conduit (11), to the first chamber (2.1) of the separate reaction container (4), which is connected by means of an opening in the lower area for discharging suspension by way of a supply conduit (24) to the hydrocyclone (26), from the upper section of which conduits (25) lead to the first chamber (4.1) as well as to the lime/limestone suspension container (6),
- the second chamber (4.2) of the separate reaction container (4) is connected by way of a conduit (13) with the limestone suspension container (6), through which the lime/limestone suspension (33) flows from the lime/limestone suspension container (6) into the second chamber (4.2) of the separate reaction container (4),
- a gas flue (10) is disposed above the two chambers (4.1, 4.2) of the separate reaction container (4), which sucks away the vapours into a vapour flue (14),
- a conduit (12) for a suspension is disposed between at least one spraying level (19) of the absorber (2) and the second chamber (4.2) of the separate reaction container (4), wherein the suspension flows from the second chamber (4.2) of the reaction container (4) toward the absorber (2),
- a process water feed (15) to a cleaning level (32) is disposed above and below at least one droplet separator level (20, 31) and above the mounting level and the spraying level (19).

2. The installation according to claim 1, **characterized in that** the contact mounting level in the absorber (2) is at least one perforated plate (18) with a spraying level (19) disposed above it.

3. The installation according to the claims 1 to 2, **characterized in that** a large and a fine droplet separator (20, 31) are connected downstream of the perforated plates (18) and spraying levels (19).

4. The installation according to the claims 1 to 3, **characterized in that** an air blower (10) for vapours, which sucks away the vapours of the reaction container (4) and of the lime/limestone suspension container (6), is disposed in front of a vapour flue (14).

5. The installation according to the claims 1 to 4, **characterized in that** an agitator (17) is disposed in the absorption suspension sump (30), in the chambers (4.1, 4.2) of the reaction container (4) and in the lime/limestone suspension container (6).

6. The installation according to the claims 1 to 5, **characterized in that** circulating pumps (5, 7) are disposed in the conduit (12) for the absorption suspension leading to the spraying levels (19) and in a conduit (13) for the limestone suspension leading to the reaction container (4).

7. The installation according to the claims 1 to 6, **characterized in that** a blower (21) is disposed for feeding the oxidation air (22) into the reaction container (4).

8. The installation according to claim 6, **characterized in that** the absorber pumps are speed-controlled for energy optimization.

9. A method for cleaning flue gases from power generating plants fired with fossil fuels in the installation according to the features of the first patent claim, by means of a multistage absorption method, in which
- in a first cleaning stage, the raw gas (1) to be cleaned flows through at least one mounting level impinged with a suspension against the direction of suspension in the absorber (2),
- the acid suspension accumulating in the absorption suspension sump (30) is fed into the first chamber (4.1) of the reaction container (4) and is treated with oxidation air (22), so that, in a first stage, calcium sulphite is oxidised to form calcium sulphate, suspension being drained in the lower area and
- the remaining suspension gets over the separation wall (29) into the second chamber (4.2) via the overflow,
- a fresh limestone suspension is fed into the second chamber (4.2),
- the product of the second stage is fed as an absorption suspension to the spraying level (19) of the absorber (2), wherein
- the CO₂ expelled by the oxidation with the oxidation air (22) in the first chamber (4.1) of the reaction container (4) and the excess oxidation air (22) are drained out of the reaction container (4) and treated separately and
- after the spraying level (19), the treated raw gas is fed to the droplet separator level (20, 31) and to a cleaning level (32) before leaving the absorber (2),
- some absorption suspension is drained from the first reaction chamber (4.1) in its lower area, a gypsum suspension (26) being separated from the absorption suspension in the hydrocyclone (27) and extracted from the process, the remaining fluid being fed to the first chamber (4.1) or/and to the lime/limestone suspension container (6).

10. The method according to claim 9, **characterized in that** the absorption suspension is fed via a perforated plate (18) to a spraying level (19) with one or several injection levels disposed above each other.

11. The method according to the claims 9 and 10, **characterized in that** the vapours are cleaned.

## Revendications

1. Installation de purification de gaz de fumée provenant de centrales à combustibles fossiles, en particulier de centrales fonctionnant selon la technologie d'oxy-combustion, comprenant plusieurs étages d'absorption avec un absorbeur (2) avec une conduite pour un gaz épuré (3) dans une hotte d'absorption (34), dans la partie supérieure duquel est disposé au moins un plan de contact encastré soumis à une suspension (12) et traversé par un gaz brut (1) et la partie inférieure de l'absorbeur (2) comporte un bassin à suspension d'absorption (30), au-dessus duquel est disposée une arrivée de gaz brut (1), où un récipient de réaction (4) distinct, dans lequel de l'air d'oxydation (22) est introduit dans la suspension d'absorption, et le bassin à suspension d'absorption (30) de l'absorbeur (2) est connecté au récipient de réaction (4) distinct, dans la partie inférieure duquel est disposée une ouverture pour évacuer la suspension par une conduite menant à un dispositif de séparation et où l'installation comporte un récipient à suspension, **caractérisée en ce que**
- un hydrocyclone (26) est disposé en tant que dispositif de séparation,
- le récipient à suspension est un récipient à suspension de chaux/calcaire (6),
- le récipient de réaction (4) distinct comprend deux chambres (4.1, 4.2) séparées par une paroi de séparation (29) à trop-plein, dans la première chambre (4.1) duquel l'air d'oxydation (22) est introduit dans la suspension d'absorption au moyen d'une lance (28) et le bassin à suspension d'absorption (30) de l'absorbeur (2) est connecté, au moyen d'une conduite (11), avec la première chambre (2.1) du conteneur de réaction (4) distinct, qui est connectée, au moyen d'une conduite d'arrivée (24), via une ouverture dans sa partie inférieure pour le déversement de la suspension, à l'hydrocyclone (26), des conduites (25) menant de sa partie supérieure à la première chambre (4.1) ainsi qu'au récipient à suspension de chaux/calcaire (6),
- la deuxième chambre (4.2) du récipient de réaction (4) distinct est connectée au récipient à suspension de chaux/calcaire (6) via une conduite (13) par laquelle la suspension de chaux/calcaire (33) s'écoule du récipient à suspension de chaux/calcaire (6) dans la deuxième chambre (4.2) du récipient de réaction (4) distinct,
- un évent à gaz (10) est disposé au-dessus des deux chambres (4.1, 4.2) du conteneur de réaction (4) distinct et sert à aspirer les fumées dans un évent à fumées (14),
- une conduite (12) pour la suspension étant disposée entre au moins un plan de pulvérisation (19) de l'absorbeur (2) et la deuxième chambre (4.2) du récipient de réaction (4) distinct, la suspension circulant de la deuxième chambre du récipient de réaction (4) à l'absorbeur (2),
- une amenée d'eau de traitement (15) menant à un plan de purification (32) au-dessus et en-dessous d'au moins un plan de séparation de gouttes (20, 31) et au-dessus du plan encastré et du plan de pulvérisation (19).

2. Installation selon la revendication 1, **caractérisée en ce que** le plan de contact encastré dans l'absorbeur (2) est au moins une tôle perforée (18) au-dessus de laquelle est disposée un plan de pulvérisation (19).

3. Installation selon les revendications 1 à 2, **caractérisée en ce qu'**un plan de séparation de gouttes grossières et un plan de séparation de gouttes fines (20, 31) est connecté en aval des tôles perforées (18) et des plans de pulvérisation (19).

4. Installation selon les revendications 1 à 3, **caractérisée en ce qu'**une soufflerie (10) pour les fumées est disposée devant un évent à fumées (14), la soufflerie aspirant les fumées du récipient de réaction (4) et du récipient à suspension de chaux/calcaire (6).

5. Installation selon les revendications 1 à 4, **caractérisée en ce qu'**un agitateur (17) est disposé dans le bassin à suspension d'absorption (30), dans les chambres (4.1, 4.2) du récipient de réaction (4) et dans le récipient à suspension de chaux/calcaire (6).

6. Installation selon les revendications 1 à 5, **caractérisée en ce que** des pompes de circulation (5, 7) sont disposées dans la conduite (12) amenant la suspension d'absorption aux plans de pulvérisation (19) et dans une conduite (13) amenant la suspension de calcaire au récipient de réaction (4).

7. Installation selon les revendications 1 à 6, **caractérisée en ce qu'**une soufflerie (21) est disposée afin d'amener l'air d'oxydation (22) dans le récipient de réaction (4).

8. Installation selon la revendication 6, **caractérisée en ce que** la vitesse de rotation des pompes de l'absorbeur est contrôlée à des fins d'optimisation énergétique.

9. Procédé de purification de gaz de fumée provenant de centrales à combustible fossile dans l'installation selon les caractéristiques de la première revendication par un procédé d'absorption en plusieurs étapes, lors duquel
- dans une première étape de purification, le gaz brut (1) à purifier traverse, dans l'absorbeur (2), au moins un plan encastré soumis à une suspension, à l'encontre de la direction de la suspension,
- la suspension acide s'accumulant dans le bassin de suspension d'absorption (30) est amenée à la première chambre (4.1) du récipient de réaction (4) et est traitée à l'air d'oxydation (22), de sorte que, lors d'une première étape, du sulfite de calcium est oxydé en sulfate de calcium, de la suspension étant prélevée dans la partie inférieure et
- la suspension restante atteint la deuxième chambre (4.2) via le trop-plein sur la paroi de séparation (29),
- de la suspension de calcaire fraîche est amenée dans la deuxième chambre (4.2),
- le produit de la deuxième étape est amené au plan de pulvérisation (19) de l'absorbeur (2) afin de servir comme suspension d'absorption, où
- le CO₂ expulsé par l'oxydation à l'air d'oxydation (22) dans la première chambre (4.1) du récipient de réaction (4) et l'air d'oxydation excédentaire (22) sont prélevés du récipient de réaction (4) et traités séparément et
- après le plan de pulvérisation (19), le gaz brut traité est amené au plan de séparation de gouttes (20, 31) et au plan de purification (32) avant de quitter l'absorbeur (2),
- de la suspension d'absorption est prélevée de la partie inférieure de la première chambre de réaction (4.1), de la suspension de gypse (27) est séparée de la suspension d'absorption dans l'hydrocyclone (26) et extrait du processus, le liquide restant étant amené à la première chambre (4.1) ou/et au récipient à suspension de chaux/calcaire (6).

10. Procédé selon la revendication 9, **caractérisé en ce que** la suspension d'absorption est amenée à un plan de pulvérisation (19) avec un ou plusieurs plans d'injection superposés au-dessus d'une tôle perforée (18).

11. Procédé selon les revendications 9 et 10, **caractérisé en ce que** les fumées sont amenées à une purification.
